# EUROPÄISCHE PATENTSCHRIFT

(11) **EP 2 755 787 B1**
(45) Veröffentlichungstag und Bekanntmachung des Hinweises auf die Patenterteilung: **20.11.2019**
(21) Anmeldenummer: 12768713.5
(22) Anmeldetag: 11.09.2012
(51) Int. Cl.: B23C 5/22

(54) **Fräswerkzeug**
Milling cutter
Fraise

(30) Priorität: 15.09.2011 AT 5112011 U
(43) Veröffentlichungstag der Anmeldung: 23.07.2014
(73) Patentinhaber: Ceratizit Luxembourg Sàrl, 8232 Mamer (LU)
(72) Erfinder: KISTER, Fabien, F-57000 Metz (FR); BAZILLON, Damien, F-54400 Longwy (FR); WONNER, Emmanuel, B-6760 Bleid (BE); TARSILIA, Thomas, F-57655 Boulange (FR)
(74) Vertreter: Ciesla, Dirk
(86) Internationale Anmeldenummer: PCT/EP2012/003805
(87) Internationale Veröffentlichungsnummer: WO 2013/037475

(56) Entgegenhaltungen:
- EP-A2- 1 800 779
- WO-A1-98/26893
- WO-A1-99/47298
- WO-A1-2009/157850
- WO-A1-2010/023659
- DE-A1- 10 308 037
- US-A1- 2003 072 625

## Beschreibung

Die vorliegende Erfindung bezieht sich auf ein Fräswerkzeug, gemäß dem Oberbegriff des Anspruch 1. Ein solches Werkzeug ist aus WO 2009/157850 A bekannt.

Auf dem technischen Gebiet der Fräsanwendungen ist es bekannt, Fräswerkzeughalter zu verwenden, die mit einem oder mehreren austauschbaren Schneideinsätzen ausgestattet sind, welche in in einem Fräswerkzeughalter vorgesehenen Schneideinsatztaschen montiert sind. In vielen Fällen sind die Schneideinsätze als Wendeschneideinsätze realisiert, die eine Mehrzahl von Schneidkantenabschnitten aufweisen, welche durch Indexieren des Schneideinsatzes nacheinander zum Schneiden verwendet werden können, z.B. durch Drehen des Schneideinsatzes um eine Symmetrieachse von diesem.

Weiter ist es für verschiedene Arten von Fräsvorgängen (wie Grobbearbeitung und Feinbearbeitung) und für verschiedene Arten von zu verarbeitenden Materialien vorteilhaft, verschiedene Arten von Schneideinsätzen und/oder Fräswerkzeughaltern zu verwenden. Zum Beispiel müssen für die Verarbeitung von Stahl, Gusseisen und Leichtmetallen unterschiedliche Freiwinkel zwischen dem Schneideinsatz und dem verarbeiteten Material realisiert werden, wenn eine optimale Schneidleistung angestrebt wird. Für manche Fräsanwendungen werden so genannte runde Schneideinsätze mit einer kreisförmig verlaufenden Schneidkante bevorzugt. Insbesondere hinsichtlich runder Schneideinsätze, die mehrfach indexiert werden können (z.B. vier oder acht Mal), ist es schwierig, eine sichere Befestigung des Schneideinsatzes in einer Schneideinsatztasche eines Fräswerkzeughalters zu erhalten. Dieses Problem ist besonders deutlich bei runden Schneideinsätzen mit einem kleinen Durchmesser. In vielen Fällen sind Schneideinsätze für Fräsanwendungen mit einem Durchgangsloch versehen, das konzentrisch zu einer Symmetrieachse des Schneideinsatzes verläuft, und die Schneideinsätze werden durch eine Schraube befestigt, die durch das Durchgangsloch geführt wird und in eine im Halter vorgesehene Gewindebohrung eingreift. In bekannten Systemen muss die Schraube aus der Gewindebohrung entfernt werden, um den in einer Schneideinsatztasche angeordneten Schneideinsatz zu indexieren, was die Gefahr mit sich bringt, dass die Schraube herunterfallen und verlorengehen kann.

EP 1 068 039 B1 beschreibt eine modulare Schneidwerkzeuganordnung, die einen Werkzeughalter enthält, der mindestens eine Einsatzaufnahmetasche mit einer Basis und mit ersten, zweiten und dritten seitlichen Stützflächen aufweist. Mindestens zwei Schneideinsätze können austauschbar in der Einsatzaufnahmetasche aufgenommen werden.

WO 2009/157850 A1 beschreibt eine Familie von Schneideinsätzen, die eine Mehrzahl von verschiedenen Einsätzen umfasst, die jeweils verschiedene Geometrien haben. Jeder Einsatz der Mehrzahl von verschiedenen Einsätzen ist dazu angepasst, in einer gemeinsamen Einsatzaufnahmetasche an einem Werkzeughalter eines Fräswerkzeugs derart aufgenommen zu werden, dass ein durch das Fräswerkzeug erzeugter Außendurchmesser unabhängig davon, welcher der Einsätze montiert ist, gleich ist.

US 2003/0072625 A1 beschreibt ein Zerspanungswerkzeug mit in Einsatztaschen aufgenommenen austauschbaren Wendeschneideinsätzen. Jede Einsatztasche hat eine Bodenwand und einen ersten und einen zweiten Rückwandabschnitt. Eine kreisförmige Ausnehmung, die eine Umfangswand aufweist, erstreckt sich von der Bodenwand nach unten. Der Schneideinsatz weist eine Oberseite, eine Seitenfläche und eine Unterseite, von der sich ein zylindrischer Vorsprung nach unten erstreckt, auf.

DE 103 08 037 A1 beschreibt ein Fräswerkzeug mit einem um eine vertikale Achse rotierenden Trägerkörper, der an seinem Umfang Aufnahmen für Schneidplatten aufweist. Am Umfang des Trägerkörpers einander folgende, auf gleicher Achse angeordnete polygonale Schneidplatten sind um einen Winkel so gegeneinander verdreht, dass durch unterschiedliche Flugbahnen der Schneidkanten eine Trennung des abzuspanenden Werkstück-Aufmaßes in mehrere Späne erzwungen wird.

Es ist Aufgabe der vorliegenden Erfindung, ein verbessertes Fräswerkzeug bereitzustellen.

Diese Aufgabe wird durch ein Fräswerkzeug gemäß Anspruch 1 gelöst.

Ein Satz von Schneideinsätzen weist eine Mehrzahl von unterschiedlich geformten runden Schneideinsätzen auf, die je eine Oberfläche, eine Unterfläche und eine Seitenfläche, welche die Oberfläche und die Unterfläche verbindet, aufweisen. Eine Schneidkante ist an einer Schnittlinie zwischen der Oberfläche und der Seitenfläche geformt. Ein an die Schneidkante angrenzender erster Abschnitt der Seitenfläche ist als kegelförmige Freifläche geformt. Eine Vielzahl von Kontaktflächen zum Kontaktieren entsprechender den Einsatz erfassender Taschenwände in einem Fräswerkzeughalter ist in der Seitenfläche gebildet. Die Kontaktflächen sind in gleichmäßigen Abständen angeordnet, so dass ein 4n-maliges Indexieren mit n ∈ {1; 2} ermöglicht ist. Die jeweiligen Kontaktflächen der verschiedenen runden Schneideinsätze des Satzes sind an übereinstimmenden Positionen und mit übereinstimmenden Ausrichtungen angeordnet.

So sind die Kontaktflächen so angeordnet, dass ein 4- oder 8-maliges Indexieren ermöglicht ist. Im vorliegenden Kontext bedeutet runder Schneideinsatz einen Schneideinsatz mit einer in Draufsicht (zumindest im Wesentlichen) kreisförmigen Schneidkante. Im vorliegenden Kontext bedeutet Indexieren, dass die Ausrichtung der Schneideinsätze geändert wird (z.B. durch Drehen um eine Symmetrieachse), so dass ein anderer Teil der Schneidkante in eine aktive Schneidstellung gebracht wird (z.B. wenn ein erster Teil der Schneidkante abgenutzt ist). Da die jeweiligen Kontaktflächen der verschiedenen runden Schneideinsätze des Satzes an übereinstimmenden Positionen und mit übereinstimmenden Ausrichtungen angeordnet sind, können die verschiedenen runden Schneideinsätze an den gleichen Schneideinsatztaschen montiert werden, die vorbestimmte den Einsatz erfassende Taschenwände aufweisen. Insbesondere können die jeweiligen Kontaktflächen an identischen Positionen und mit identischen Ausrichtungen vorgesehen sein. Die Größe und die Form der Kontaktflächen können sich aber für unterschiedliche Schneideinsätze unterscheiden. Vorzugsweise umrandet die kegelförmige Freifläche den ganzen Schneideinsatz unbehindert, d.h. ist entlang der ganzen Schneidkante vorgesehen.

Da verschiedene runde Schneideinsätze vorgesehen sind, die entsprechende Kontaktflächen haben, können verschiedene runde Schneideinsätze - die z.B. an verschiedene zu verarbeitende Materialien angepasst sein können - auf den gleichen Fräswerkzeughalter montiert werden. So kann der gleiche Fräswerkzeughalter zur Verarbeitung verschiedener Materialien mit runden Schneideinsätzen verwendet werden, und es kann in jedem Fall ein für das jeweilige zu verarbeitende Material optimierter runder Schneideinsatz verwendet werden.

Gemäß einer Ausführung sind die Freiflächen der verschiedenen runden Schneideinsätze des Satzes mit verschiedenen Freiwinkeln versehen. In diesem Fall können die verschiedenen runden Schneideinsätze, die auf den gleichen Halter montiert werden können, an verschiedene zu verarbeitende Materialien angepasst sein. Im vorliegenden Kontext bedeutet der Begriff Freiwinkel den dem Schneideinsatz inhärenten Freiwinkel, der durch die Form des Schneideinsatzes definiert wird. Es ist anzumerken, dass abhängig von der Ausrichtung, in der der Schneideinsatz auf einen Fräswerkzeughalter montiert wird, der resultierende Freiwinkel (bezüglich des zu verarbeitenden Materials) sich von dem dem Schneideinsatz inhärenten Freiwinkel unterscheiden kann. Vorzugsweise haben alle runden Schneideinsätze des Satzes positive Freiwinkel. Vorzugsweise liegen die jeweiligen dem Schneideinsatz inhärenten Freiwinkel in dem Bereich zwischen 0° und unter (α - 90°), wobei (α - 90°) ein Winkel ist, in dem die Kontaktflächen bezüglich einer Symmetrieachse angeordnet sind.

Gemäß einer Ausführung enthält der Satz von Schneideinsätzen weiter mindestens einen nicht runden Schneideinsatz, der mit Kontaktflächen versehen ist, die an Positionen und mit Ausrichtungen angeordnet sind, welche denjenigen der runden Schneideinsätze entsprechen. In diesem Fall kann der nicht runde Schneideinsatz auch so auf den gleichen Fräswerkzeughalter montiert werden, dass er von den gleichen den Einsatz erfassenden Taschenwänden gehalten wird, wie die Mehrzahl von runden Schneideinsätzen. So kann der gleiche Fräswerkzeughalter für eine Mehrzahl von runden Schneideinsätzen und für mindestens einen nicht runden Schneideinsatz verwendet werden. Dadurch wird die Vielseitigkeit weiter erhöht. Vorzugsweise ist eine Mehrzahl solcher auf den gleichen Halter montierbarer unterschiedlicher nicht runder Schneideinsätze vorgesehen. Zum Beispiel kann der nicht runde Schneideinsatz eine so genannte "S-Form" Geometrie, d.h. eine im Wesentlichen quadratische Grundform mit abgeschrägten Ecken der Schneidkante in Draufsicht, oder eine so genannte "O-Typ" Geometrie haben, d.h. eine im Wesentlichen achteckige Grundform der Schneidkante in Draufsicht. Insbesondere können die jeweiligen Kontaktflächen an identischen Positionen und mit identischen Ausrichtungen vorgesehen werden. Die Größe und die Form der Kontaktflächen können aber für verschiedene Schneideinsätze unterschiedlich sein.

Gemäß einer Ausführung sind die Kontaktflächen als flache Flächen geformt. In diesem Fall sind die Kontaktflächen besonders einfach in der Herstellung. Vorzugsweise können die flachen Flächen alle einen Kreis tangieren, der zu einer Symmetrieachse des jeweiligen Schneideinsatzes konzentrisch ist.

Gemäß einer Ausführung weisen die Schneideinsätze jeweils eine Symmetrieachse auf, und die Kontaktflächen sind mit dem gleichen Winkel bezüglich der Symmetrieachse angeordnet. Vorzugsweise sind die Kontaktflächen derart in einem Winkel α > 0 bezüglich der Symmetrieachse angeordnet, dass untere Enden der Kontaktflächen einander näher sind als obere Enden.

Ein Fräswerkzeughalter weist mindestens eine Schneideinsatztasche auf, die zur Aufnahme eines Schneideinsatzes ausgebildet ist. Die Schneideinsatztasche weist auf: eine Sitzfläche, die konfiguriert ist, um eine Unterfläche eines Schneideinsatzes zu erfassen, und mindestens drei den Einsatz erfassende Taschenwände, die konfiguriert sind, um untere Bereiche einer Seitenfläche eines Schneideinsatzes zu erfassen. Die den Einsatz erfassenden Taschenwände sind durch flache Ebenen gebildet, die je in einem Winkel von mehr als 90° zur Sitzfläche gebildet sind. Die den Einsatz erfassenden Taschenwände sind im gleichen Winkel bezüglich der Sitzfläche gebildet. Schnittlinien der jeweiligen den Einsatz erfassenden Taschenwände mit einer Ebene parallel zur Sitzfläche verlaufen so, dass: eine erste Schnittlinie, die einer ersten den Einsatz erfassenden Taschenwand entspricht, einen Winkel von 90° mit einer zweiten Schnittlinie bildet, die einer zweiten den Einsatz erfassenden Taschenwand entspricht, die erste Schnittlinie einen Winkel von 45° mit einer dritten Schnittlinie bildet, die einer dritten den Einsatz erfassenden Taschenwand entspricht, und die zweite Schnittlinie einen Winkel von 135° mit der dritten Schnittlinie bildet.

Dass die den Einsatz erfassenden Taschenwände in einem Winkel von mehr als 90° zur Sitzfläche gebildet sind, bedeutet, dass die den Einsatz erfassenden Taschenwände in einer Richtung von der Sitzfläche weg nach außen geneigt sind, d.h. dass die unteren Enden der den Einsatz erfassenden Taschenwände, die der Sitzfläche näher liegen, einander näher sind als die oberen Enden der den Einsatz einfassenden Taschenwände, die weiter von der Sitzfläche entfernt sind. Da die den Einsatz erfassenden Taschenwände derart nach außen geneigt sind, ist eine Indexierung (d.h. Ändern des aktiven Schneidkantenabschnitts) möglich, ohne eine Befestigungsschraube zur Befestigung des Schneideinsatzes vollständig zu entfernen. Stattdessen reicht ein einfaches Lösen der Befestigungsschraube bis zu einem gewissen Grad. Da die Taschenwände alle mit dem gleichen Winkel bezüglich der Sitzfläche gebildet sind, kann eine Kontaktfläche eines Schneideinsatzes, die bei einer ersten Ausrichtung des Schneideinsatzes mit einer ersten den Einsatz erfassenden Taschenwand zusammenwirkt, nach dem Indexieren mit einer zweiten den Einsatz erfassenden Taschenwand zusammenwirken, d.h., wenn der Schneideinsatz mit einer anderen Ausrichtung in der Schneideinsatztasche montiert ist. In der Ebene parallel zur Sitzfläche verlaufen die erste, zweite und dritte Schnittlinie vorzugsweise derart, dass sie einen einzigen Kreis tangieren. Da die Schnittlinien mit den definierten Ausrichtungen angeordnet sind, verlaufen die Schnittlinien entlang von Teilen eines virtuellen (oder imaginären) Oktagons. Folglich ist ein 8-maliges Indexieren bezüglich einer Schneidkante derart ermöglicht, dass in jeder Ausrichtung des Schneideinsatzes drei Kontaktflächen des Schneideinsatzes entsprechende den Einsatz erfassende Taschenwände der Schneideinsatztasche kontaktieren.

Gemäß einer Ausführung weist der Schneidwerkzeughalter eine Befestigungsschraube auf, die in eine in der Sitzfläche vorgesehene Gewindebohrung eingreift und zur Befestigung des Schneideinsatzes in der Schneideinsatztasche dazu angeordnet ist, durch einen Schneideinsatz zu verlaufen, und der Fräswerkzeughalter ist so konfiguriert, dass der Schneideinsatz indexierbar ist, ohne die Befestigungsschraube aus der Gewindebohrung zu entfernen. In diesem Fall wird das Indexieren des Schneideinsatzes ohne die Gefahr des Verlusts der Befestigungsschraube ermöglicht.

Mindestens ein Schneideinsatz ist derart in den Fräswerkzeughalter montiert, dass mindestens drei Kontaktflächen des Schneideinsatzes die erste den Einsatz erfassende Taschenwand, die zweite den Einsatz erfassende Taschenwand, bzw. die dritte den Einsatz erfassende Taschenwand kontaktieren. Anders gesagt kontaktiert eine erste Kontaktfläche des Schneideinsatzes die erste den Einsatz erfassende Taschenwand, eine zweite Kontaktfläche des Schneideinsatzes kontaktiert die zweite den Einsatz erfassende Taschenwand, und eine dritte Kontaktfläche des Schneideinsatzes kontaktiert die dritte den Einsatz erfassende Taschenwand. Somit kann ein verlässliches Einklemmen des Schneideinsatzes selbst für runde Schneideinsätze mit kleinem Durchmesser sichergestellt werden.

Weitere Vorteile und weitere Entwicklungen gehen aus der folgenden Beschreibung einer Ausführungsform unter Bezug auf die Zeichnungen hervor.

In den Figuren sind:
- Fig. 1:: eine Seitenansicht eines Fräswerkzeughalters gemäß einer Ausführungsform;
- Fig. 2:: eine vergrößerte Ansicht einer Schneideinsatztasche des Fräswerkzeughalters der Fig. 1;
- Fig. 3:: eine Ansicht, teilweise im Schnitt, des Fräswerkzeughalters mit einem Schneideinsatz in der Schneideinsatztasche angeordnet;
- Fig. 4:: eine vergrößerte Ansicht eines Details der Fig. 3;
- Fig. 5:: eine weitere Ansicht des Fräswerkzeughalters mit einem Schneideinsatz in der Schneideinsatztasche angeordnet, mit dem Schneideinsatz teilweise im Schnitt;
- Fig. 6:: eine weitere Ansicht des Fräswerkzeughalters mit dem Schneideinsatz teilweise im Schnitt dargestellt, zur Erläuterung der Anordnung des Schneideinsatzes in der Schneideinsatztasche;
- Fig. 7a:: eine perspektivische Ansicht eines ersten runden Schneideinsatzes;
- Fig. 7b:: eine Detailansicht im Schnitt des ersten runden Schneideinsatzes;
- Fig. 8:: eine Ansicht des ersten runden Schneideinsatzes in die Schneideinsatztasche des Fräswerkzeughalters montiert;
- Fig. 9a:: eine perspektivische Ansicht eines zweiten runden Schneideinsatzes;
- Fig. 9b:: eine Detailansicht im Schnitt des zweiten runden Schneideinsatzes;
- Fig. 10a:: eine perspektivische Ansicht eines dritten runden Schneideinsatzes;
- Fig. 10b:: eine Detailansicht im Schnitt des dritten runden Schneideinsatzes;
- Fig. 11a:: eine perspektivische Ansicht eines ersten nicht runden Schneideinsatzes;
- Fig. 11b:: eine perspektivische Ansicht des ersten nicht runden Schneideinsatzes in die Schneideinsatztasche des Fräswerkzeughalters montiert;
- Fig. 12a:: eine perspektivische Ansicht eines zweiten nicht runden Schneideinsatzes; und
- Fig. 12b:: eine perspektivische Ansicht des zweiten nicht runden Schneideinsatzes in die Schneideinsatztasche des Fräswerkzeughalters montiert.

### AUSFÜHRUNGSFORM

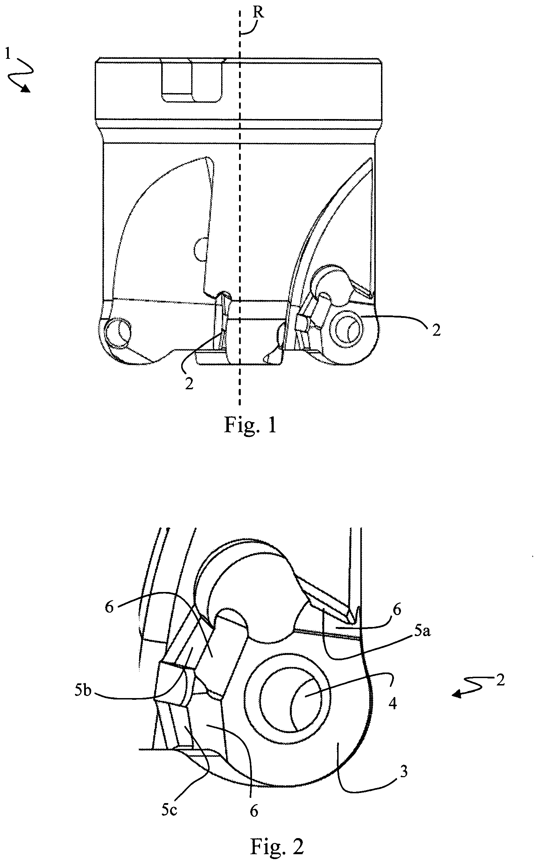

Nun wird eine Ausführungsform unter Bezug auf die beiliegenden Zeichnungen beschrieben. Zunächst wird ein Fräswerkzeughalter -1- gemäß der Ausführungsform unter Bezug auf Fig. 1 bis 6 beschrieben.

Fig. 1 ist eine Seitenansicht des Fräswerkzeughalters -1-. Der Fräswerkzeughalter -1- weist eine Drehachse -R- auf, um die der Fräswerkzeughalter -1- während eines Fräsvorgangs gedreht wird. Der Fräswerkzeughalter gemäß der Ausführungsform ist besonders geeignet für Stirnfräsen. Der Fräswerkzeughalter -1- enthält eine Mehrzahl von Schneideinsatztaschen -2-. Obwohl eine Ausführungsform mit vier Schneideinsatztaschen -2- in den Zeichnungen gezeigt ist, kann der Fräswerkzeughalter -1- auch weniger als vier Schneideinsatztaschen -2- oder mehr als vier Schneideinsatztaschen -2- aufweisen. Die Schneideinsatztaschen -2- sind je konfiguriert, um jeweils einen Schneideinsatz aufzunehmen, und sie sind gleich konfiguriert.

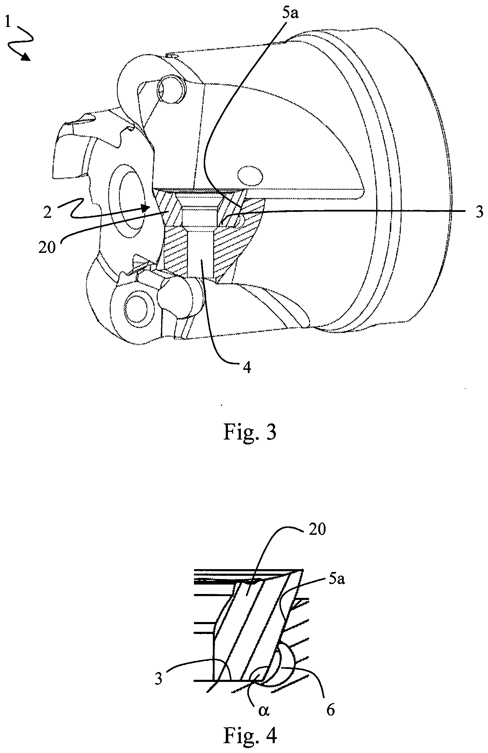

Fig. 2 ist eine vergrößerte Ansicht, die eine Schneideinsatztasche -2- mehr im Einzelnen zeigt. Die Schneideinsatztasche -2- enthält eine Sitzfläche -3-, die konfiguriert ist, um eine Unterfläche -22- eines Schneideinsatzes zu erfassen, der weiter unten ausführlicher beschrieben wird. Die Sitzfläche -3- wird von einer flachen Fläche geformt, die eine Auflageebene definiert. Eine Gewindebohrung -4-, die konfiguriert ist, um eine Befestigungsschraube aufzunehmen, ist in der Sitzfläche -3- vorgesehen. Die Gewindebohrung -4-erstreckt sich entlang einer Achse, die senkrecht zur Sitzfläche -3- ist. Die Schneideinsatztasche -2- weist weiter eine Mehrzahl von den Einsatz erfassenden Taschenwänden -5a-, -5b-, -5c- auf, die konfiguriert sind, um Abschnitte einer Seitenfläche eines Schneideinsatzes zu erfassen, insbesondere untere Bereiche einer Seitenfläche eines Schneideinsatzes. In der Ausführungsform sind eine erste den Einsatz erfassende Taschenwand -5a-, eine zweite den Einsatz erfassende Taschenwand -5b- und eine dritte den Einsatz erfassende Taschenwand -5c- vorgesehen. Wie in den in Fig. 2 und 4 zu sehen, sind entsprechende Vertiefungen -6- zwischen der Sitzfläche -3- und der ersten den Einsatz erfassenden Taschenwand -5a-, der zweiten den Einsatz erfassenden Taschenwand -5b- und der dritten den Einsatz erfassenden Taschenwand -5c- vorgesehen. So werden die jeweiligen den Einsatz erfassenden Taschenwände -5a-, -5b-, -5c- von flachen Ebenen gebildet und sind mit der Sitzfläche -3- über die Vertiefungen -6- verbunden.

Fig. 3 ist eine Ansicht, teilweise im Schnitt, des Fräswerkzeughalters mit einem in der Schneideinsatztasche -2- angeordneten Schneideinsatz -20-, und Fig. 4 ist ein Detail der Fig. 3, unter Bezug auf welches die Ausrichtung der den Einsatz erfassenden Taschenwände -5a-, -5b-, -5c- bezüglich der Sitzfläche -3-beschrieben wird. Wie in Fig. 4 zu sehen, ist die den Einsatz erfassende Taschenwand -5a- in einem Winkel -α- von mehr als 90° zur Sitzfläche -3-gebildet. In der gezeigten Ausführungsform beträgt der Winkel -α- zum Beispiel 110°. Es sind aber auch andere Winkel größer als 90° möglich. Obwohl nur der Winkel -α- zwischen der ersten den Einsatz erfassenden Taschenwand -5a- und der Sitzfläche -3- in Fig. 4 gezeigt ist, ist die zweite den Einsatz erfassende Taschenwand -5b- in dem gleichen Winkel -α- zur Sitzfläche -3- gebildet, und die dritte den Einsatz erfassende Taschenwand -5c-ist auch in dem gleichen Winkel -α- zur Sitzfläche -3- gebildet. Damit sind die den Einsatz erfassenden Taschenwände -5a- bis -5c- so konfiguriert, dass sie von ihren unteren Enden zu ihren oberen Enden gesehen (d.h. weg von der Sitzfläche -3-) nach außen geneigt sind.

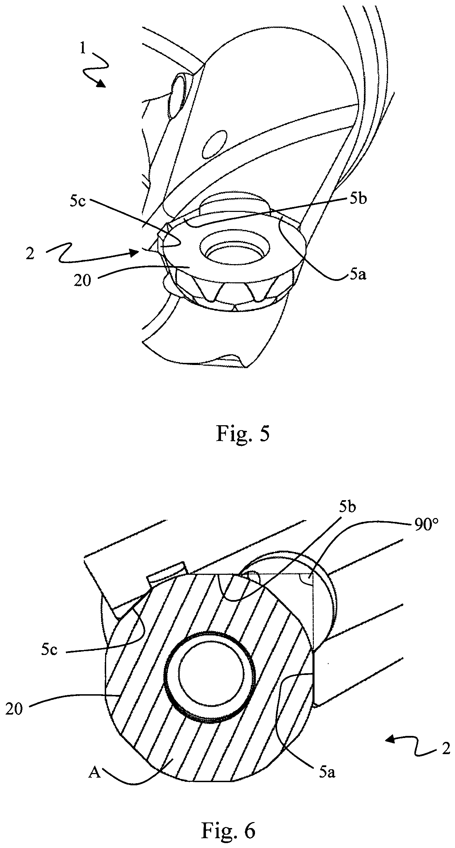

Die Ausrichtung der den Einsatz erfassenden Taschenwände -5a-, -5b-, -5c-wird nun ausführlicher unter Bezug auf die Fig. 5 und 6 beschrieben. Fig. 5 ist eine Ansicht einer Schneideinsatztasche -2- mit einem darin montierten Schneideinsatz -20-. In der Ansicht der Fig. 5 ist der obere Teil des Schneideinsatzes -20- geschnitten, um die Anordnung der den Einsatz erfassenden Taschenwände -5a-, -5b- and -5c- zu zeigen. Fig. 6 ist eine entsprechende Ansicht in einer Richtung im Wesentlichen senkrecht zur Sitzfläche -3-, in der der Schneideinsatz in einer Ebene -A- parallel zur Sitzfläche -3- geschnitten ist. Folglich kann man in Fig. 6 die Schnittlinien der den Einsatz erfassenden Taschenwände -5a-, -5b- und -5c- mit der Ebene -A-parallel zur Sitzfläche -3- sehen. Wie in Fig. 6 zu sehen, ist die Schnittlinie der ersten den Einsatz erfassenden Taschenwand -5a- mit der Ebene -A- parallel zur Sitzfläche -3- in einem Winkel von 90° bezüglich der Schnittlinie der zweiten den Einsatz erfassenden Taschenwand -5b- mit der gleichen Ebene -A- parallel zur Sitzfläche -3- angeordnet. Weiter ist die Schnittlinie der ersten den Einsatz erfassenden Taschenwand -5a- mit der Ebene -A- parallel zur Sitzfläche -3- in einem Winkel von 45° bezüglich der Schnittlinie der dritten den Einsatz erfassenden Taschenwand -5c- mit der gleichen Ebene -A- parallel zur Sitzfläche -3- angeordnet. Die Schnittlinie der zweiten den Einsatz erfassenden Taschenwand -5b- mit der Ebene -A- parallel zur Sitzfläche -3- ist in einem Winkel von 135° bezüglich der Schnittlinie der dritten den Einsatz erfassenden Taschenwand -5c- mit der gleichen Ebene -A- parallel zur Sitzfläche -3-angeordnet. Die definierten Schnittlinien (bezüglich der ersten bis dritten den Einsatz erfassenden Taschenwände -5a-, -5b-, -5c-) tangieren alle den gleichen Kreis in der Ebene parallel zur Sitzfläche -3-, wobei die Mitte des Kreises sich am Schnittpunkt der Achse der Gewindebohrung -4- mit der Ebene -A- parallel zur Sitzfläche -3- befindet. Anders gesagt verlaufen die definierten Schnittlinien entlang von Seiten eines imaginären Oktogons, dessen Mitte sich am Schnittpunkt der Achse der Gewindebohrung -4- mit der Ebene -A- befindet. Nun wird ein Satz von Schneideinsätzen für Fräsanwendungen gemäß der Ausführungsform beschrieben.

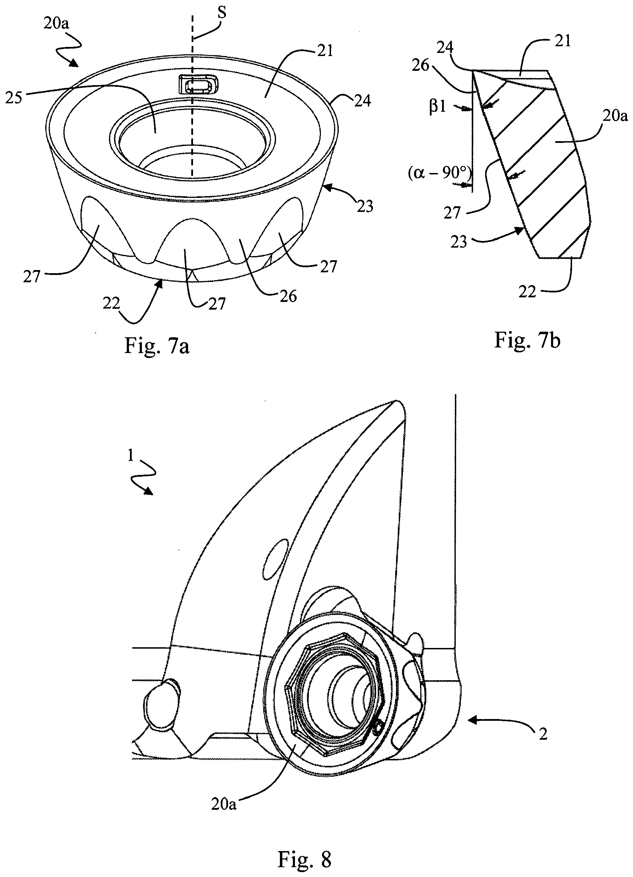

Ein erster runder Schneideinsatz -20a- wird nun unter Bezug auf die Fig. 7a, 7b und 8 beschrieben. Fig. 7a zeigt den ersten runden Schneideinsatz -20a- in einer perspektivischen Ansicht, und Fig. 8 zeigt den ersten runden Schneideinsatz -20a- in der Schneideinsatztasche -2- des Fräswerkzeughalters -1- montiert. Fig. 7b ist eine Querschnittsansicht eines Teils des ersten runden Schneideinsatzes -20a- im Bereich einer Seitenfläche -23-.

Der erste runde Schneideinsatz -20a- weist eine Oberfläche -21- und eine Unterfläche -22- auf. Eine Seitenfläche -23- verbindet die Oberfläche -21- und die Unterfläche -22-. Eine Schneidkante -24- ist an der Schnittlinie zwischen der Oberfläche -21- und der Seitenfläche -23- gebildet. Die Schneidkante -24- ist so konfiguriert, dass sie - in einer Draufsicht auf die Oberfläche -21- - eine Kreisform hat und in Umfangsrichtung die Oberfläche -21- umgibt. An die Schneidkante -24- angrenzend kann die Oberfläche -21- in geeigneter Weise mit einer Spanfläche versehen sein. Weiter kann die Schneidkante -24- mit einer Fase versehen sein, um die Schneidkante -24- während des Fräsvorgangs zu schützen. Der erste runde Schneideinsatz -20a- ist mit einer Symmetrieachse -S- versehen, um die herum der erste runde Schneideinsatz -20a- eine 8-fache Drehsymmetrie aufweist, so dass er 8-fach indexierbar ist. Die Schneidkante -24- erstreckt sich in einer Ebene senkrecht zur Symmetrieachse -S-. Die Unterfläche -22- erstreckt sich auch in einer Ebene senkrecht zur Symmetrieachse -S-. Der Schneideinsatz -20a- ist mit einem Durchgangsloch -25- versehen, das sich durch den Schneideinsatz -20a-von der Oberfläche -21- zur Unterfläche -22- erstreckt. Das Durchgangsloch -25- erstreckt sich konzentrisch zur Symmetrieachse -S-.

Nachfolgend wird die Konfiguration der Seitenfläche -23- unter Bezug auf die Fig. 7a und 7b ausführlicher beschrieben.

Angrenzend an die Schneidkante -24- ist die Seitenfläche -23- mit einer Freifläche -26- versehen. Die Freifläche -26- hat eine kegelförmige Form (zumindest in dem der Schneidkante -24- direkt benachbarten Bereich) und ist so konfiguriert, dass sie den Schneideinsatz -20a- in Umfangsrichtung umgibt. Die Freifläche -26- ist so konfiguriert, dass an die Schneidkante -24-angrenzend ein Freiwinkel -β1- gebildet ist. In der gezeigten Ausführungsform beträgt der Freiwinkel -β1- des ersten runden Schneideinsatzes -20a- 15°. In der Ausführungsform ist der Freiwinkel -β1- entlang der ganzen Schneidkante -24- konstant.

Die Seitenfläche -23- ist weiter mit einer Mehrzahl von Kontaktflächen -27-versehen, die konfiguriert sind, um entsprechende den Einsatz erfassende Taschenwände -5a-, -5b-, -5c- im Fräswerkzeughalter -1- zu kontaktieren. Die Kontaktflächen -27- sind durch flache Flächen gebildet, die sich in einem Winkel -α- bezüglich der Unterfläche -22- (d.h. in einem Winkel (α - 90°) bezüglich der Symmetrieachse -S-) erstrecken, wobei der Winkel -α- dem Winkel -α- entspricht, der oben bezüglich des Fräswerkzeughalters -1-beschrieben wurde. In der gezeigten Ausführungsform sind acht solche Kontaktflächen -27- vorgesehen.

Die Kontaktflächen -27- sind so angeordnet, dass Schnittlinien der Kontaktflächen -27- mit einer Ebene lotrecht zur Symmetrieachse -S- entlang der Seiten eines Oktagons (in dieser Ebene lotrecht zur Symmetrieachse) verlaufen, dessen Mitte auf der Symmetrieachse -S- liegt. So ist in einer Ebene lotrecht zur Symmetrieachse -S- jede Kontaktfläche -27- in einem Winkel von 135° bezüglich ihrer benachbarten Kontaktflächen -27- angeordnet. Folglich sind die Kontaktflächen -27- so angeordnet, dass drei Kontaktflächen -27-gleichzeitig die erste den Einsatz erfassende Taschenwand -5a-, die zweite den Einsatz erfassende Taschenwand -5b- und die dritte den Einsatz erfassende Taschenwand -5c- kontaktieren, wenn der erste runde Schneideinsatz -20a- so in die Schneideinsatztasche -2- eingesetzt ist, dass seine Unterfläche -22-gegen die Sitzfläche -3- aufliegt. Die Kontaktflächen -27- sind somit in gleichmäßigen Abständen angeordnet, so dass ein 8-maliges Indexieren des ersten runden Schneideinsatzes -20a- ermöglicht ist, d.h. der erste runde Schneideinsatz -20a- kann von einer ersten Einbaustellung (in Fig. 8 gezeigt) durch eine Drehung um 45° um die Symmetrieachse -S- in eine zweite Einbaustellung gebracht werden.

Wenn der erste runde Schneideinsatz -20a- in der Schneideinsatztasche -2-montiert ist, wird eine Befestigungsschraube (nicht gezeigt) derart durch das Durchgangsloch -25- geführt, dass die Befestigungsschraube in die Gewindebohrung -4- eingreift. Folglich wird der erste runde Schneideinsatz -20a- durch die Befestigungsschraube in der Schneideinsatztasche -2- fixiert, und seine Drehung wird durch formschlüssigen Eingriff von drei Kontaktflächen -27- mit den ersten bis dritten den Einsatz erfassenden Taschenwänden -5a- bis -5c- verhindert. Aufgrund der Position und Ausrichtung der den Einsatz erfassenden Taschenwände -5a- bis -5c- kann der erste runde Schneideinsatz -20a- ohne Entfernen der Befestigungsschraube aus der Gewindebohrung -4- indexiert werden. Durch geringfügiges Lösen der Befestigungsschraube, so dass die Unterfläche -22-des Schneideinsatzes -20a- etwas von der Sitzfläche -3- weg bewegt werden kann, wird ein Indexieren des Schneideinsatzes -20a- durch Drehen des Schneideinsatzes -20a- um die Symmetrieachse -S- möglich. Auf diese Weise wird die Gefahr des Verlierens der Befestigungsschraube während des Indexiervorgangs beseitigt.

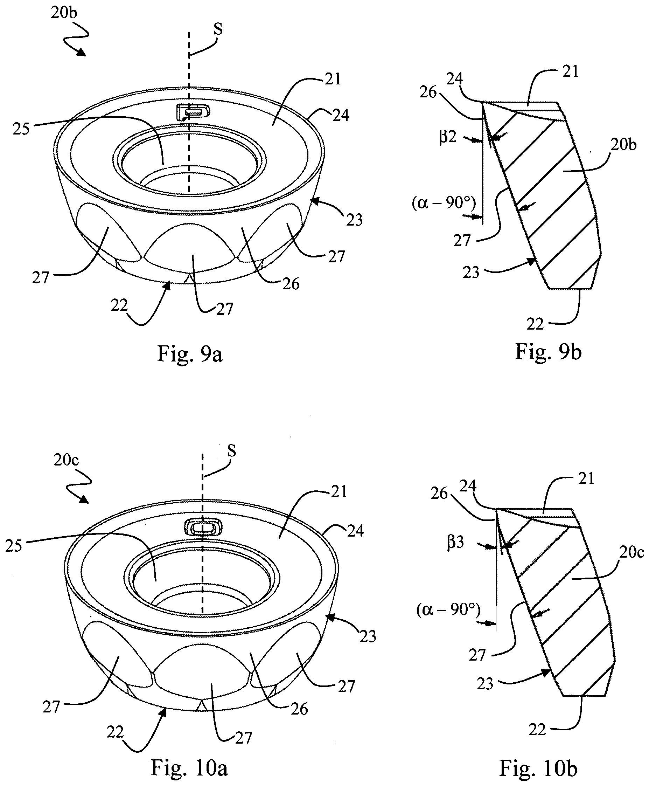

Ein zweiter runder Schneideinsatz -20b- des Satzes von Schneideinsätzen wird nun unter Bezug auf die Fig. 9a und 9b beschrieben.

Der zweite runde Schneideinsatz -20b- unterscheidet sich von dem oben beschriebenen ersten runden Schneideinsatz -20a- nur durch die Form und Ausrichtung der Freifläche und durch die Größen und/oder Formen der Kontaktflächen -27-. Daher werden die gleichen Bezugszeichen für den zweiten runden Schneideinsatz -20b- verwendet, und im Vergleich mit dem ersten runden Schneideinsatz -20a- identisch realisierte Merkmale werden nicht erneut beschrieben.

Der zweite runde Schneideinsatz -20b- weist eine Oberfläche -21-, eine Unterfläche -22- und eine Seitenfläche -23- auf. Eine Schneidkante -24- und ein Durchgangsloch -25- sind ähnlich wie beim ersten runden Schneideinsatz -20a-vorgesehen.

Wieder hat die Freifläche -26- eine kegelförmige Form (zumindest in dem direkt an die Schneidkante -24- angrenzenden Bereich) und ist so konfiguriert, dass sie den Schneideinsatz -20b- in Umfangsrichtung umgibt. Die Freifläche -26- ist so konfiguriert, dass an die Schneidkante -24- angrenzend ein Freiwinkel -β2-(der sich von dem Freiwinkel -β1- des ersten runden Schneideinsatzes -20a-unterscheidet) vorgesehen ist. In der gezeigten Ausführungsform beträgt der Freiwinkel -β2- des zweiten runden Schneideinsatzes -20b- 11°, d.h. er ist kleiner als der Freiwinkel -β1- des ersten runden Schneideinsatzes -20a-.

Ähnlich dem ersten runden Schneideinsatz -20a- enthält der zweite runde Schneideinsatz -20b- acht Kontaktflächen -27-, die in gleichmäßigen Abständen angeordnet sind, so dass ein achtmaliges Indexieren möglich ist. Die Kontaktflächen -27- des zweiten runden Schneideinsatzes -20b- sind in übereinstimmenden Positionen und mit übereinstimmenden Ausrichtungen verglichen mit den Kontaktflächen -27- des ersten runden Schneideinsatzes -20a- angeordnet. Die Größe der Kontaktflächen -27- des zweiten runden Schneideinsatzes -20b- kann sich aber von der Größe der Kontaktflächen -27- des ersten runden Schneideinsatzes -20a- unterscheiden. So sind die Kontaktflächen -27- des zweiten runden Schneideinsatzes -20b- so angeordnet, dass der zweite runde Schneideinsatz -20b- in der gleichen Weise in die Schneideinsatztasche -2- eingebaut werden kann, wie oben bezüglich des ersten runden Schneideinsatzes -20a- beschrieben wurde. Insbesondere kann der zweite runde Schneideinsatz -20b- so eingebaut werden, dass drei Kontaktflächen -27- die erste den Einsatz erfassende Taschenwand -5a-, die zweite den Einsatz erfassende Taschenwand -5b- und die dritte den Einsatz erfassende Taschenwand -5c- kontaktieren. Ähnlich wie der erste runde Schneideinsatz -20a- kann der zweite runde Schneideinsatz -20b- in der Schneideinsatztasche -2- indexiert werden, ohne die Befestigungsschraube aus der Gewindebohrung -4- zu lösen.

Ein dritter runder Schneideinsatz -20c- des Satzes von Schneideinsätzen wird nun unter Bezug auf die Fig. 10a und 10b beschrieben.

Der dritte runde Schneideinsatz -20c- unterscheidet sich vom oben beschriebenen ersten runden Schneideinsatz -20a- nur durch die Form und Ausrichtung der Freifläche und durch die Größen und/oder Formen der Kontaktflächen -27-. Daher werden die gleichen Bezugszeichen für den dritten runden Schneideinsatz -20c- verwendet, und Merkmale, die in gleicher Weise wie beim ersten runden Schneideinsatz -20a- vorgesehen sind, werden nicht erneut beschrieben.

Der dritte runde Schneideinsatz -20c- enthält eine Oberfläche -21-, eine Unterfläche -22- und eine Seitenfläche -23-. Eine Schneidkante -24- und ein Durchgangsloch -25- sind in gleicher Weise wie beim ersten runden Schneideinsatz -20a- vorgesehen.

Wieder hat die Freifläche -26- eine kegelförmige Form (zumindest in dem direkt an die Schneidkante -24- angrenzenden Bereich) und ist so konfiguriert, dass sie den Schneideinsatz -20c- in Umfangsrichtung umgibt. Die Freifläche -26- ist so konfiguriert, dass an die Schneidkante -24- angrenzend ein Freiwinkel -β3-(der sich von dem Freiwinkel -β1- des ersten runden Schneideinsatzes -20a- und dem Freiwinkel -β2- des zweiten runden Schneideinsatzes -20b-unterscheidet) vorgesehen ist. In der gezeigten Ausführungsform beträgt der Freiwinkel -β3- des dritten runden Schneideinsatzes -20c- 8°, d.h. er ist kleiner als der Freiwinkel -β1- des ersten runden Schneideinsatzes -20a- und kleiner als der Freiwinkel -β2- des zweiten runden Schneideinsatzes -20b-.

Ähnlich dem ersten runden Schneideinsatz -20a- enthält der dritte runde Schneideinsatz -20c- acht Kontaktflächen -27-, die in gleichmäßigen Abständen angeordnet sind, so dass ein achtmaliges Indexieren möglich ist. Die Kontaktflächen -27- des dritten runden Schneideinsatzes -20c- sind in übereinstimmenden Positionen und mit übereinstimmenden Ausrichtungen im Vergleich mit den Kontaktflächen -27- des ersten runden Schneideinsatzes -20a- angeordnet. Die Größe der Kontaktflächen -27- des dritten runden Schneideinsatzes -20c- kann sich aber von der Größe der Kontaktflächen -27- des ersten runden Schneideinsatzes -20a- unterscheiden. So sind die Kontaktflächen -27- des dritten runden Schneideinsatzes -20c- so angeordnet, dass der dritte runde Schneideinsatz -20c- auch in der Schneideinsatztasche -2- in der gleichen Weise montiert werden kann, wie oben bezüglich des ersten runden Schneideinsatzes -20a- beschrieben wurde. Insbesondere kann der dritte runde Schneideinsatz -20c- so montiert werden, dass drei Kontaktflächen -27- die erste den Einsatz erfassende Taschenwand -5a-, die zweite den Einsatz erfassende Taschenwand -5b- und die dritte den Einsatz erfassende Taschenwand -5c- kontaktieren. Ähnlich dem ersten runden Schneideinsatz -20a- kann der dritte runde Schneideinsatz -20c-in der Schneideinsatztasche -2- indexiert werden, ohne die Befestigungsschraube aus der Gewindebohrung -4- zu lösen.

Die Freiwinkel -β1-, -β2-, -β3- des Satzes von Schneideinsätzen liegen in einem Bereich zwischen 0° und kleiner als (α - 90°), d.h. 0° ≤ β1 < (α - 90°), 0° ≤ β2 < (α - 90°), und 0° ≤ β3 < (α - 90°).

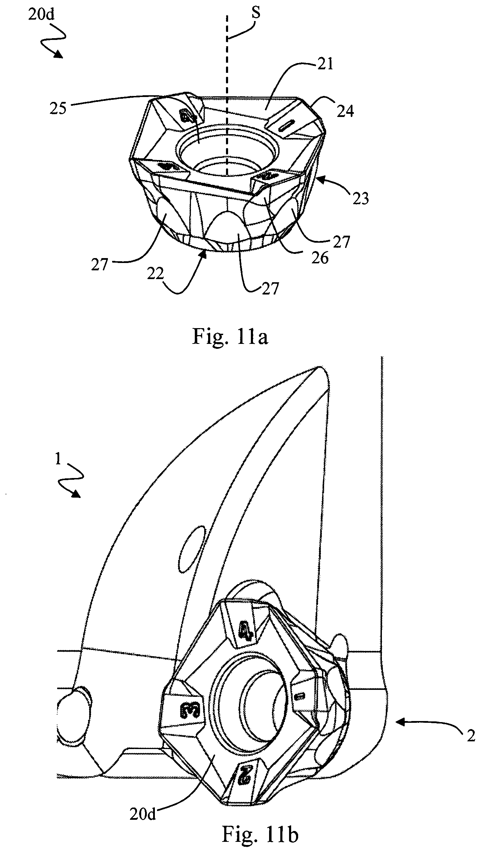

Nun wird ein erster nicht runder Schneideinsatz -20d- unter Bezug auf die Fig. 11a und 11b beschrieben. Für den ersten nicht runden Schneideinsatz -20d- werden die gleichen Bezugszeichen verwendet, und Merkmale, die im Vergleich mit dem ersten runden Schneideinsatz -20a- gleich sind, werden nicht erneut beschrieben.

Der erste nicht runde Schneideinsatz -20d- enthält eine Oberfläche -21-, eine Unterfläche -22- und eine Seitenfläche -23-. Ein Durchgangsloch -25- ist ähnlich wie beim ersten runden Schneideinsatz -20a- vorgesehen. Eine Schneidkante -24- ist an der Schnittliniee zwischen der Oberfläche -21- und der Seitenfläche -23- gebildet. Im Gegensatz zu den oben beschriebenen runden Schneideinsätzen -20a- bis -20c- ist die Schneidkante -24- des ersten nicht runden Schneideinsatzes -20d- aber so konfiguriert, dass sie - in einer Draufsicht auf die Oberfläche -21- - eine im Wesentlichen quadratische Form mit abgeschrägten Ecken hat, wobei die abgeschrägten Ecken sich im Wesentlichen in einem Winkel von 45° Grad zu den benachbarten Hauptabschnitten der Schneidkante -24- erstrecken. So ist der erste nicht runde Schneideinsatz als ein so genannter S-Typ-Schneideinsatz realisiert. Die Schneidkante -24- umgibt die Oberfläche -21- in Umfangsrichtung. An die Schneidkante -24- angrenzend kann die Oberfläche -21- in geeigneter Weise mit einer Spanfläche versehen sein. Weiter kann die Schneidkante -24- mit einer Fase versehen sein, um die Schneidkante -24- während des Fräsvorgangs zu schützen.

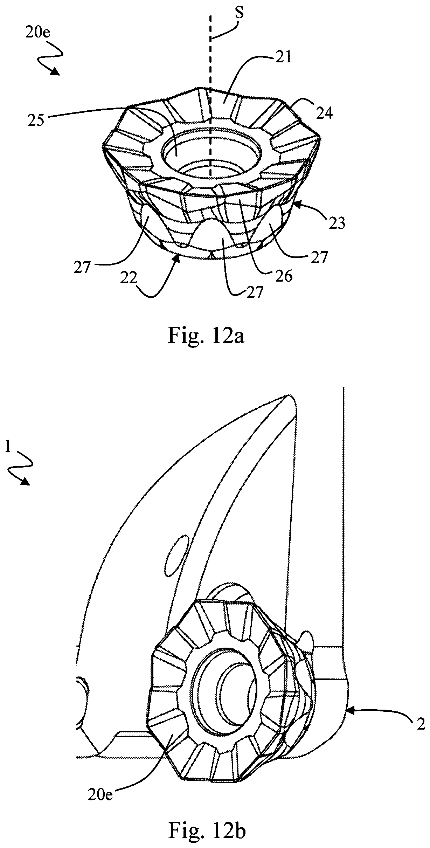

Ähnlich den oben beschriebenen runden Schneideinsätzen enthält der erste nicht runde Schneideinsatz -20d- acht Kontaktflächen -27-, die in gleichmäßigen Abständen angeordnet sind, so dass ein n-maliges Indexieren ermöglicht ist. Aufgrund der Form der Schneidkante -24- ist der erste nicht runde Schneideinsatz -20d- so konfiguriert, dass ein 4-maliges Indexieren ermöglicht ist. Die Kontaktflächen -27- des ersten nicht runden Schneideinsatzes -20d- sind an übereinstimmenden Positionen und mit übereinstimmenden Ausrichtungen im Vergleich mit den Kontaktflächen -27-des ersten runden Schneideinsatzes -20a- angeordnet. Die Größe der Kontaktflächen -27- des ersten nicht runden Schneideinsatzes -20d- kann sich aber von der Größe der Kontaktflächen -27- des ersten runden Schneideinsatzes -20a- unterscheiden. So sind die Kontaktflächen -27- des ersten nicht runden Schneideinsatzes -20d- so angeordnet, dass der erste nicht runde Schneideinsatz -20d- auch in der gleichen Weise an der Schneideinsatztasche -2- montiert werden kann, wie oben unter Bezug auf den ersten runden Schneideinsatz -20a- beschrieben wurde. Insbesondere kann der erste nicht runde Schneideinsatz -20d- so montiert werden, dass drei Kontaktflächen -27- die erste den Einsatz erfassende Taschenwand -5a-, die zweite den Einsatz erfassende Taschenwand -5b- und die dritte den Einsatz erfassende Taschenwand -5c- kontaktieren. Ähnlich dem ersten runden Schneideinsatz -20a- kann der erste nicht runde Schneideinsatz -20d- in der Schneideinsatztasche -2- indexiert werden, ohne die Befestigungsschraube aus der Gewindebohrung -4- zu lösen. Obwohl eine Seitenfläche -23- mit einer ziemlich komplexen und spezifischen Form in Fig. 11a und 11b gezeigt ist, sind auch andere Ausführungen der Seitenfläche -23- möglich. Gleiches gilt für die Form der Schneidkante -24- und der Oberfläche -21-. Nun wird ein zweiter nicht runder Schneideinsatz -20e- unter Bezug auf die Fig. 12a und 12b beschrieben. Es werden die gleichen Bezugszeichen für den zweiten nicht runden Schneideinsatz -20e- verwendet, und Merkmale; die im Vergleich mit dem ersten nicht runden Schneideinsatz -20a- gleich realisiert sind, werden nicht noch einmal beschrieben.

Der zweite nicht runde Schneideinsatz -20e- weist eine Oberfläche -21-, eine Unterfläche -22- und eine Seitenfläche -23- auf. Ein Durchgangsloch -25- ist ähnlich wie beim ersten runden Schneideinsatz -20a- vorgesehen. Eine Schneidkante -24- ist an der Schnittlinie zwischen der Oberfläche -21- und der Seitenfläche -23- gebildet. Im Gegensatz zu den oben beschriebenen Schneideinsätzen -20a- bis -20d- ist die Schneidkante -24- des zweiten nicht runden Schneideinsatzes -20e- aber so konfiguriert, dass sie - in einer Draufsicht auf die Oberfläche -21- - eine im Wesentlichen achteckige Form hat. So ist der zweite nicht runde Schneideinsatz -20e- als ein so genannter O-Typ-Schneideinsatz realisiert. Die Schneidkante -24- umgibt die Oberfläche -21- in Umfangsrichtung. An die Schneidkante -24- angrenzend kann die Oberfläche -21- in geeigneter Weise mit einer Spanfläche versehen sein. Weiter kann die Schneidkante -24- mit einer Fase versehen sein, um die Schneidkante -24- während des Fräsvorgangs zu schützen.

Ähnlich den oben beschriebenen Schneideinsätzen weist der zweite *nicht* runde Schneideinsatz -20e- acht Kontaktflächen -27- auf, die in gleichmäßigen Abständen angeordnet sind, so dass ein n-maliges Indexieren möglich ist. Aufgrund der Form der Schneidkante -24- ist der zweite nicht runde Schneideinsatz -20e- so konfiguriert, dass ein 8-maliges Indexieren möglich ist. Die Kontaktflächen -27- des zweiten nicht runden Schneideinsatzes -20e- sind an übereinstimmenden Positionen und mit übereinstimmenden Ausrichtungen im Vergleich mit den Kontaktflächen -27- des ersten runden Schneideinsatzes -20a- angeordnet. Die Größe der Kontaktflächen -27- des zweiten nicht runden Schneideinsatzes -20e- kann sich aber von der Größe der Kontaktflächen -27- des ersten runden Schneideinsatzes -20a- unterscheiden. So sind die Kontaktflächen -27- des zweiten nicht runden Schneideinsatzes -20e- so angeordnet, dass der zweite nicht runde Schneideinsatz -20e- auch in der gleichen Art und Weise an der Schneideinsatztasche -2- montiert werden kann, wie es oben bezüglich des ersten runden Schneideinsatzes -20a- beschrieben wurde. Insbesondere kann der zweite nicht runde Schneideinsatz -20e- so montiert werden, dass drei Kontaktflächen -27- die erste den Einsatz erfassende Taschenwand -5a-, die zweite den Einsatz erfassende Taschenwand -5b- und die dritte den Einsatz erfassende Taschenwand -5c- kontaktieren. Ähnlich dem ersten runden Schneideinsatz -20a- kann der zweite nicht runde Schneideinsatz -20e- in der Schneideinsatztasche -2- indexiert werden, ohne die Befestigungsschraube aus der Gewindebohrung -4- zu lösen. Obwohl eine Seitenfläche -23- mit einer ziemlich komplexen und spezifischen Form in den Fig. 12a und 12b gezeigt ist, sind auch andere Ausführungen der Seitenfläche -23- möglich. Gleiches gilt für die Form der Schneidkante -24- und der Oberfläche -21-.

Es wurde ein Satz von runden Schneideinsätzen -20a- bis -20c- und nicht runden Schneideinsätzen -20d- und -20e- beschrieben, wobei alle Schneideinsätze Kontaktflächen -27- enthalten, die an gleichen Positionen und mit gleichen Ausrichtungen angeordnet sind, so dass alle diese Schneideinsätze an der gleichen Schneideinsatztasche -2- montiert werden können, und dass in jedem Fall drei Kontaktflächen -27- die erste den Einsatz erfassende Taschenwand -5a-, die zweite den Einsatz erfassende Taschenwand -5b- und die dritte den Einsatz erfassende Taschenwand -5c-kontaktieren. Gemäß der Ausführungsform können verschiedene runde Schneideinsätze, die z.B. zur Verarbeitung verschiedener Materialien geeignet sind, in die gleichen Schneideinsatztaschen -2- montiert werden. Weiter können auch nicht runde Schneideinsätze, z.B. für verschiedene Verarbeitungsschritte, in die gleichen Schneideinsatztaschen -2- montiert werden. Weiter, da die Fixierung mit Hilfe von drei den Einsatz erfassenden Taschenwänden -5a-bis -5c -, die gleichzeitig drei jeweilige Kontaktflächen -27- des Schneideinsatzes kontaktieren, realisiert ist, ist eine sichere Fixierung (insbesondere das Verhindern der Drehung) selbst für Schneideinsätze ermöglicht, die einen kleinen Durchmesser wie z.B. 10 mm haben.

Aufgrund der Konfiguration der den Einsatz erfassenden Taschenwände -5a-bis -5c- und der entsprechenden Konfiguration der Kontaktflächen -27- ist das Indexieren der Schneideinsätze ohne ein völliges Lösen einer Befestigungsschraube aus der Gewindebohrung -4- ermöglicht.

## Patentansprüche

1. Fräswerkzeug, das einen Fräswerkzeughalter und mindestens einen Schneideinsatz (20a; 20b; 20c; 20d; 20e) aufweist,
wobei der Fräswerkzeughalter aufweist:
mindestens eine Schneideinsatztasche (2), die dazu angepasst ist, einen Schneideinsatz aufzunehmen, **dadurch gekennzeichnet, dass** die Schneideinsatztasche (2) aufweist:
eine Sitzfläche (3), die dazu konfiguriert ist, eine Unterfläche (22) eines Schneideinsatzes zu erfassen, und mindestens drei den Einsatz erfassende Taschenwände (5a, 5b, 5c), die konfiguriert sind, um Abschnitte einer Seitenfläche (23) eines Schneideinsatzes zu erfassen; wobei die den Einsatz erfassenden Taschenwände (5a, 5b, 5c) durch flache Ebenen gebildet sind, die je in einem Winkel (α) von mehr als 90° zur Sitzfläche (3) ausgebildet sind; wobei die den Einsatz erfassenden Taschenwände (5a, 5b, 5c) in dem gleichen Winkel (α) bezüglich der Sitzfläche (3) gebildet sind;
Schnittlinien der jeweiligen den Einsatz erfassenden Taschenwände (5a, 5b, 5c) mit einer Ebene (A) parallel zur Sitzfläche (3), die so verlaufen dass:
eine einer ersten den Einsatz erfassenden Taschenwand (5a) entsprechende erste Schnittlinie einen Winkel von 90° mit einer einer zweiten den Einsatz erfassenden Taschenwand (5b) entsprechenden zweiten Schnittlinie bildet,
die erste Schnittlinie einen Winkel von 45° mit einer einer dritten den Einsatz erfassenden Taschenwand (5c) entsprechenden dritten Schnittlinie bildet, und
die zweite Schnittlinie einen Winkel von 135° mit der dritten Schnittlinie bildet,
und wobei der Schneideinsatz so in den Fräswerkzeughalter (1) montiert ist, dass mindestens drei Kontaktflächen (27) des Schneideinsatzes (20a; 20b; 20c; 20d; 20e) die erste den Einsatz erfassende Taschenwand (5a), die zweite den Einsatz erfassende Taschenwand (5b) bzw. die dritte den Einsatz erfassende Taschenwand (5c) kontaktieren.

## Claims

1. A milling tool comprising a milling tool holder and at least one cutting insert (20a; 20b; 20c; 20d; 20e);
the milling tool holder comprising:
at least one cutting insert pocket (2) adapted for receiving a cutting insert, **characterized in that** the cutting insert pocket (2) comprises:
a seat face (3) configured to engage a bottom surface (22) of a cutting insert and at least three insert-engaging pocket walls (5a, 5b, 5c) configured to engage portions of a side surface (23) of a cutting insert; the insert-engaging pocket walls (5a, 5b, 5c) being formed by flat planes each formed at an angle (α) of larger than 90° to the seat face (3); the insert-engaging pocket walls (5a, 5b, 5c) being formed at the same angle (α) with regard to the seat face (3);
intersection lines of the respective insert-engaging pocket walls (5a, 5b, 5c) with a plane (A) in parallel to the seat face (3) extending such that:
a first intersection line corresponding to a first insert-engaging pocket wall (5a) forms an angle of 90° to a second intersection line corresponding to a second insert-engaging pocket wall (5b),
the first intersection line forms an angle of 45° to a third intersection line corresponding to a third insert-engaging pocket wall (5c), and
the second intersection line forms an angle of 135° to the third intersection line, and
wherein the cutting insert is mounted in the milling tool holder (1) such that at least three contacting surfaces (27) of the cutting insert (20a; 20b; 20c; 20d; 20e) are contacting the first insert-engaging pocket wall (5a), the second insert-engaging pocket wall (5b), and the third insert-engaging pocket wall (5c), respectively.

## Revendications

1. Outil de fraisage comprenant un porte-outil de fraisage et au moins un insert de coupe (20a ; 20b ; 20c ; 20d ; 20e), le porte-outil de fraisage comprenant :
au moins une poche d'insert de coupe (2) conçue pour recevoir un insert de coupe,
**caractérisé en ce que**
la poche d'insert de coupe (2) comporte :
une surface de siège (3) conçue pour venir en contact avec une surface inférieure (22) d'un insert de coupe et au moins trois parois de poche (5a, 5b, 5c), venant en contact avec l'insert, qui sont conçues pour venir en contact avec des parties d'une surface latérale (23) d'un insert de coupe ;
les parois de poche (5a, 5b, 5c), venant en contact avec l'insert, étant formées par des plans plats qui forment chacun un angle (α) de plus de 90° par rapport à la surface de siège (3) ; les parois de poche (5a, 5b, 5c), venant en contact avec l'insert, formant le même angle (α) par rapport à la surface de siège (3) ;
des lignes d'intersection des parois de poche respectives (5a, 5b, 5c), venant en contact avec l'insert, avec un plan (A) parallèle à la surface de siège (3), lesquelles s'étendent de telle sorte que :
une première ligne d'intersection, correspondant à une première paroi de poche (5a), venant en contact avec l'insert, forme un angle de 90° avec une deuxième ligne d'intersection correspondant à une deuxième paroi de poche (5b) venant en contact avec l'insert ;
la première ligne d'intersection forme un angle de 45° avec une troisième ligne d'intersection correspondant à une troisième paroi de poche (5c) venant en contact avec l'insert, et
la deuxième ligne d'intersection forme un angle de 135° avec la troisième ligne d'intersection,
et l'insert de coupe étant monté dans le porte-outil de fraisage (1) de telle sorte qu'au moins trois surfaces de contact (27) de l'insert de coupe (20a ; 20b ; 20c ; 20d ; 20e) viennent en contact avec la première paroi de poche (5a) venant en contact avec l'insert, la deuxième paroi de poche (5b) venant en contact avec l'insert ou la troisième paroi de poche (5c) venant en contact avec l'insert.
